# FASCICULE DE BREVET EUROPEEN

(11) **EP 2 208 453 B1**
(45) Date de publication et mention de la délivrance du brevet: **09.09.2015**
(21) Numéro de dépôt: 10356001.7
(22) Date de dépôt: 12.01.2010
(51) Int. Cl.: A47L 9/16

(54) **Dispositif de séparation cyclonique avec rampe d'accélération**
Vorrichtung zur Drallabscheidung mit Beschleunigungsrampe
Cyclonic separation device with acceleration ramp

(30) Priorité: 15.01.2009 FR 0900166
(43) Date de publication de la demande: 21.07.2010
(73) Titulaire: Seb S.A., 69130 Ecully (FR)
(72) Inventeur: Soen, Alain, 27950 Saint-Marcel (FR); Renard, Sylvain, 27920 Saint-Pierre de Bailleul (FR)
(74) Mandataire: Kiehl, Hubert

(56) Documents cités:
- EP-A- 0 827 710
- WO-A-2005/099546
- FR-A- 2 817 138
- US-A1- 2007 084 159
- US-A1- 2007 234 687
- US-A1- 2008 040 883

## Description

L'invention concerne un corps définissant une chambre cyclonique, que nous appellerons simplement « bol », d'un dispositif de séparation par inertie ou cyclone des poussières et déchets présents dans un flux d'air. Elle est particulièrement adaptée à une utilisation pour un aspirateur à poussières. Elle concerne aussi un dispositif de séparation cyclonique et un aspirateur à poussières en tant que tels comprenant un tel bol.

Un premier type de dispositif de collecte des poussières et déchets pour aspirateurs de l'état de la technique consiste en un filtre se présentant sous la forme d'un sac en papier, interposé entre un tube d'arrivée d'un flux d'air, comprenant des poussières et déchets aspirés depuis une surface à nettoyer, et un groupe moto-ventilateur. L'inconvénient de cette solution provient du fait que le sac filtrant en papier finit par se remplir et nécessite son remplacement, ce qui représente une opération de maintenance peu agréable et coûteuse pour l'utilisateur. De plus, le remplissage du sac se fait au détriment de la performance de l'aspirateur puisqu'il entraîne une perte de sa puissance.

Afin de remédier à ces inconvénients, un second type de dispositif de collecte des poussières et déchets de l'état de la technique repose sur une séparation de type cyclonique ou par inertie de ces poussières et déchets. Dans un tel dispositif, un flux d'air est conduit dans une chambre cyclonique de séparation où il poursuit un cheminement tourbillonnaire favorable à la séparation des déchets. En effet, les déchets les plus lourds sont séparés du flux d'air principal par l'effet centrifuge du flux tourbillonnaire. Ensuite, le flux d'air est évacué de la chambre cyclonique à travers une grille cylindrique aménagée sur un filtre séparateur disposé au centre de cette chambre, ce qui représente une seconde opération complémentaire de filtrage des déchets, retenant en général à ce stade des poussières. Finalement, les poussières et déchets restent prisonniers dans une zone de stockage aménagée dans la partie basse de la chambre cyclonique. Il suffit alors de les vider de temps en temps en les déversant simplement dans une poubelle, par l'intermédiaire d'une trappe aménagée dans cette chambre de stockage.

Un tel dispositif de séparation cyclonique peut être couplé à un aspirateur de type traineau, comprenant aussi un sac de collecte, comme cela est décrit dans les documents FR2817138, EP0827710 et FR2848090. Le document FR2817138 correspond au préambule de la revendication 1.

En variante, un tel dispositif de séparation cyclonique peut être utilisé seul, comme c'est notamment le cas pour les aspirateurs de faible puissance dont le bâti se trouve intégré dans un manche rigide directement manipulé par un opérateur, généralement appelés aspirateurs « balai », comme cela est décrit dans le document EP1611829.

La performance des dispositifs de séparation cyclonique dépend de nombreux paramètres comme la vitesse et la direction du flux d'air en entrée, la qualité de la trajectoire tourbillonnaire afin d'opérer la séparation centrifuge des déchets et éviter qu'une partie du flux d'air pollué ne traverse la grille du séparateur avant l'évacuation centrifuge de ses déchets...

Les solutions existantes ne sont pas entièrement satisfaisantes et l'objet général de l'invention est de proposer une solution améliorée de séparation de type cyclonique des déchets d'un flux d'air aspiré par un aspirateur.

La présente invention est atteinte à l'aide d'un dispositif de séparation cyclonique de déchets et poussières pour aspirateur à poussières, comportant une chambre cyclonique intérieure sensiblement cylindrique accessible par une entrée d'air, ainsi qu'un filtre séparateur logé dans la partie centrale de la chambre intérieure, caractérisé en ce qu'il comprend un tuyau d'entrée, qui conduit le flux d'air provenant du suceur vers la chambre cyclonique intérieure, ce tuyau d'entrée comprenant une portion de tuyau pour conduire un flux d'air vers l'entrée d'air, cette portion de tuyau étant disposée autour de la chambre cyclonique intérieure sensiblement cylindrique, depuis un point initial vers un point final à proximité de l'entrée d'air, la section de cette portion de tuyau vers le point final étant plus petite que sa section vers le point initial de sorte à former une rampe d'accélération pour le flux d'air entre ces deux points.

Une telle rampe d'accélération associée à la chambre de séparation permet d'éviter une architecture trop importante de ladite chambre en dissociant cette fonction d'accélération de la chambre en elle-même. En d'autres termes, pour une chambre de taille déterminée, cette rampe permet d'améliorer l'efficacité de séparation des poussières et déchets en augmentant leur vitesse. Cet aspect est d'autant plus important lorsque le dispositif est utilisé dans un aspirateur où les moteurs sont de petite taille et génèrent des débits relativement faibles, tels les moteurs des aspirateurs de type balai dont certains fonctionnent sur batteries.

Avantageusement, la portion de tuyau pour conduire le flux d'air vers l'entrée d'air de la chambre cyclonique parcourt au moins un quart de tour autour de la chambre cyclonique, afin que les vitesses soient significativement augmentées par rapport à l'absence d'une telle portion de tuyau.

De préférence, la portion de tuyau pour conduire le flux d'air vers l'entrée d'air de la chambre cyclonique parcourt au moins deux cinquièmes de tour autour de la chambre cyclonique, ce qui permet d'avoir un flux plus homogène, tout en autorisant une accélération du flux plus graduelle.

Par ailleurs, la portion de tuyau pour conduire le flux d'air vers l'entrée d'air de la chambre cyclonique est sensiblement horizontale.

Avantageusement, la portion de tuyau pour conduire le flux d'air vers l'entrée d'air de la chambre cyclonique est reliée à une portion de tuyau verticale dont la section décroit, vu dans le sens de circulation de l'air. Ce conduit vertical participe ainsi également à l'accélération du flux, et permet de réaliser cette accélération sur une longueur importante, cette lente progression de l'accélération du flux d'air limitant les turbulences et donc le bruit associé.

Selon un mode préféré de mise en oeuvre de l'invention, le dispositif de séparation cyclonique comporte un bol amovible délimitant la chambre cyclonique, le bol portant la portion de tuyau pour conduire le flux d'air vers l'entrée d'air de la chambre cyclonique.

Cette architecture facilite le nettoyage du dispositif de séparation, tout en rationalisant les coûts de fabrication et de montage.

Plus précisément, le bol comprend un corps tubulaire de surface latérale extérieure cylindrique délimitant la chambre cyclonique, la portion de tuyau pour conduire le flux d'air vers l'entrée d'air de la chambre cyclonique étant fixée en contact avec la surface latérale extérieure cylindrique du corps tubulaire du bol.

En variante de réalisation, le tuyau est formé par une double nervure sur le bol fermé par la paroi en correspondance du logement recevant le bol. Le tuyau est ainsi essentiellement issu du logement recevant le bol.

La présente invention couvre également les modes de réalisation où le tuyau est formé en partie sur le bol et en partie sur le logement recevant le bol.

Avantageusement, le bol comprend une partie inférieure inclinée et articulée formant une porte afin de faciliter le vidage du bol et son nettoyage.

La présente invention porte également sur un aspirateur à poussières comprenant un dispositif de séparation cyclonique des poussières et déchets selon l'une des caractéristiques précédemment énoncées.

Avantageusement, l'aspirateur est un aspirateur balai comprenant un logement agencé dans son manche pour recevoir le dispositif de séparation cyclonique selon l'une des caractéristiques précédemment énoncées où le bol est amovible, ce logement comprenant une première connexion dans sa partie inférieure reliée à une portion de tuyau verticale du bol et une seconde connexion dans sa partie supérieure reliée à la sortie du dispositif de séparation cyclonique.

Ces objets, caractéristiques et avantages de la présente invention seront exposés en détail dans la description suivante d'un mode d'exécution particulier fait à titre non-limitatif en relation avec les figures jointes parmi lesquelles :
La figure 1 représente une vue d'ensemble en perspective d'un aspirateur balai selon un mode d'exécution de l'invention.
La figure 2 représente une vue éclatée d'un dispositif de séparation cyclonique selon le mode d'exécution de l'invention.
La figure 3 représente une vue en perspective du bol du dispositif de séparation cyclonique selon le mode d'exécution de l'invention.
La figure 4 représente une vue de dessus d'une coupe selon un plan horizontal P au niveau de la rampe d'accélération du bol du dispositif de séparation cyclonique selon le mode d'exécution de l'invention.
Les figures 5 et 6 représentent deux vues en perspective selon deux angles différents du dispositif de séparation cyclonique selon le mode d'exécution de l'invention.
La figure 7 représente une vue de côté d'un séparateur du dispositif de séparation cyclonique selon le mode d'exécution de l'invention.
La figure 8 représente une vue en coupe de côté du séparateur du dispositif de séparation cyclonique selon le mode d'exécution de l'invention.
La figure 9 représente le logement du bâti de l'aspirateur pour recevoir le dispositif de séparation cyclonique selon le mode d'exécution de l'invention.

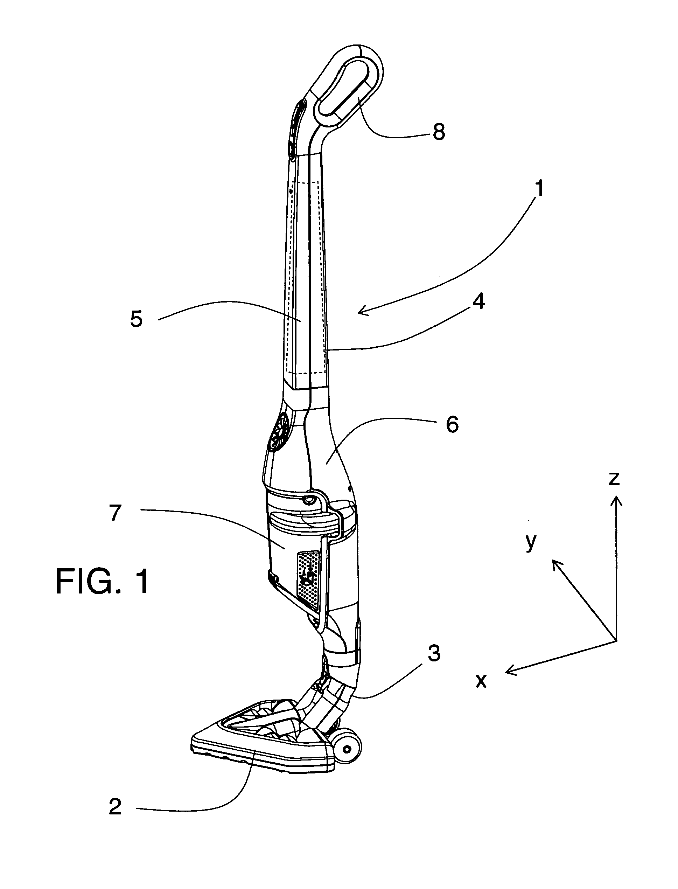

La figure 1 représente un aspirateur balai 1, comprenant un suceur 2 triangulaire relié à un manche 4 par l'intermédiaire d'une partie intermédiaire de liaison 3. Par le terme manche, on entend ici, non seulement une partie longiligne de l'appareil terminée par une poignée 8 à son extrémité supérieure, mais également divers éléments associés à la partie longiligne formant bâti, comprenant une batterie 5, un moteur 6, et un dispositif de séparation et stockage 7 des déchets.

Pour la description suivante, nous définissons la direction z comme l'axe du manche 4 de l'aspirateur, correspondant à un axe sensiblement vertical dans la position de repos de l'aspirateur représentée sur la figure 1, l'axe longitudinal x comme l'axe perpendiculaire à l'axe z traversant le manche 4 de l'arrière vers l'avant dans son plan de symétrie, et l'axe y transversal perpendiculaire aux axes x et z. Dans la position de repos de l'aspirateur, les axes x et y seront donc dans un plan sensiblement horizontal. Ce repère pourra être incliné quand le manche sera incliné. Toutefois, pour des raisons de simplification de la description suivante, nous appellerons z la direction verticale, x la direction horizontale longitudinale et y la direction horizontale transversale, sous-entendant une description réalisée quand l'aspirateur est dans sa position de repos ou quand le dispositif de séparation cyclonique 7 est positionné verticalement.

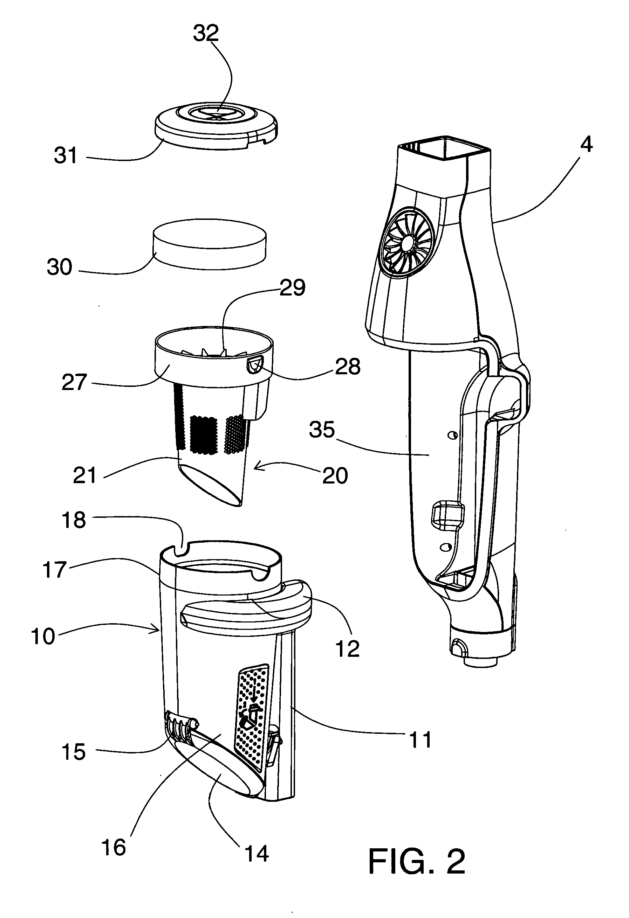

L'invention porte en effet sur le dispositif de séparation et stockage 7 des déchets, dont une vue éclatée est représentée en figure 2, qui se compose d'un corps extérieur, que nous appelons bol 10, au sein duquel se loge un filtre séparateur 20. Un filtre 30 en mousse est positionné dans la partie haute du filtre séparateur 20. Enfin, le dispositif de séparation cyclonique est fermé par un couvercle 31, comprenant une ouverture circulaire 32 pour l'évacuation par le haut du flux d'air propre après son traitement par le dispositif de séparation cyclonique 7. Ce dispositif, une fois assemblé, se positionne dans un logement 35 aménagé dans le manche 4 de l'aspirateur.

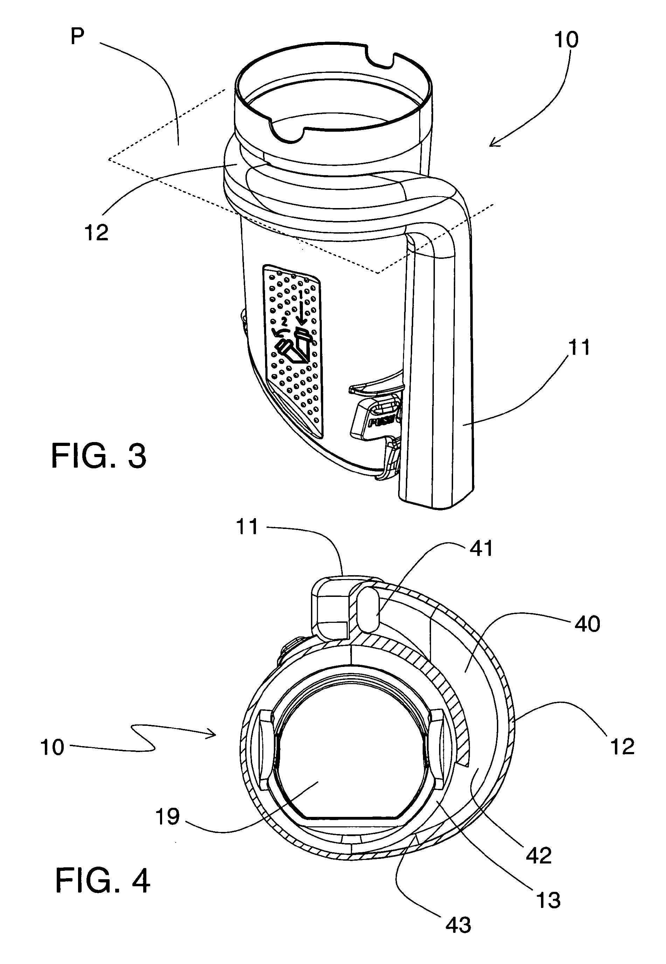

Le bol 10 se présente sous la forme d'un corps sensiblement cylindrique, particulièrement visible sur les figures 3 à 5, comprenant une entrée 13 dans sa partie supérieure, visible sur la figure 4, reliée à un tuyau d'entrée, qui conduit le flux d'air provenant du suceur vers une chambre intérieure sensiblement cylindrique 19 du bol 10. Ce tuyau d'entrée, lié au bol 10, comprend une première portion 11 sensiblement verticale, formant un coude dans sa partie haute, poursuivie par une seconde portion 12 sensiblement horizontale, formant une rampe d'accélération 40 pour le flux d'air, visible sur la figure 4, qui entre ainsi dans la chambre intérieure 19 du bol avec une vitesse et une direction adaptées à la formation d'un flux tourbillonnaire.

Par ailleurs, la première portion verticale 11 présente avantageusement une diminution de section depuis la partie basse vers la partie haute reliée à la portion 12, afin également de réaliser une accélération du flux.

En effet, la réduction de section sur la portion verticale 11 est d'au moins 30 % entre l'entrée du conduit et sa liaison avec la portion 12.

De plus, le coude a été dimensionné, notamment au niveau de ses rayons de courbure de jonction aux portions 11 et 12, pour limiter les turbulences lors du redressement du flux d'air. Il a notamment été évité des zones angulaires propices au décrochement du flux, sources de perturbations aérauliques.

La face inférieure du bol 10 est fermée par une porte 14 articulée par une charnière 15, permettant de vider les poussières et déchets accumulés dans la partie inférieure 16 qui sert de zone de stockage. La porte 14 présente une inclinaison d'environ 45 degrés par rapport à un plan horizontal. Cette inclinaison permet de réduire la vitesse du flux tourbillonnaire dans la partie inférieure de stockage 16 du bol, permettant ainsi un stockage des déchets moins perturbé limitant leur remontée. Une telle inclinaison pourrait être comprise entre 20 et 50 degrés pour donner des résultats convenables.

Selon un élément essentiel de l'invention, la rampe d'accélération 40 formée par la portion horizontale du tuyau 12 parcourt au moins un quart de tour autour de la chambre intérieure 19 du bol 10, de préférence au moins deux cinquièmes de tour, afin de comprendre une longueur suffisante pour l'accélération du flux d'air entrant. Sur cette longueur, qui part d'un point initial 41 au niveau du coude entre les portions verticale 11 et horizontale 12 du tuyau d'entrée, jusqu'à un point final 42 où la portion horizontale 12 débouche sur l'entrée 13 prévue dans la chambre cylindrique 19, la section du tuyau 12 diminue progressivement afin d'induire l'accélération du flux d'air. Entre les points 41 et 42, la section se réduit d'au moins 30%, soit une réduction de section supérieure à 50 % entre la partie basse de la portion 11, telle que visible figure 3, et le point 42 débouchant dans la chambre 19.

Lors de l'arrivée du flux d'air à l'extrémité 42 de la rampe d'accélération 40, le flux d'air poursuit sa course le long d'une prolongation 43 de la paroi extérieure de la portion de tuyau 12, de sorte d'aboutir dans la chambre intérieure 19 du bol selon une direction tangentielle à cette chambre.

Selon le mode d'exécution décrit, la réduction de la section de la portion de tuyau 12 pour former la rampe d'accélération 40 est progressive. Cette rampe d'accélération pourrait toutefois présenter d'autres géométries, d'autres formes de section circulaire, elliptique, ovoïde, ou rectangulaire...

De plus, la diminution de cette section pourrait être obtenue selon différentes approches, linéaires ou non linéaires, continues ou discontinues. Cette portion de tuyau peut être fabriquée par l'assemblage de deux demi-tuyaux moulés séparément puis assemblés par soudure.

Par ailleurs, cette portion de tuyau peut être la réunion de deux demi-tuyaux, l'un étant disposé sur le bol, en correspondance avec une empreinte au fond du logement 35 formant le second demi-tuyau.

Enfin, la portion de tuyau 12 peut ne pas être horizontale, mais inclinée vers le bas ou le haut. La portion de tuyau 12 formant la rampe d'accélération est donc agencée autour de la paroi latérale extérieure au corps principal du bol délimitant la chambre intérieure 19 du bol 10, ce qui permet de former une rampe d'accélération sans modifier la géométrie de ce corps principal du bol ou de la chambre intérieure 19, et sans encombrer sa partie supérieure dédiée à l'évacuation du flux d'air traité.

La portion de tuyau 12 formant la rampe d'accélération reste de préférence en contact avec la paroi extérieure latérale du corps principal du bol 10 pour limiter l'encombrement global du bol 10 tout en favorisant le maintien stable de la portion de tuyau formant la rampe d'accélération, puisqu'elle peut être fixée sur toute sa longueur au bol 10, voire rester simplement en appui pour réduire ses vibrations. Ce corps principal du bol 10, délimitant la chambre intérieure 19, a été représenté comme un corps tubulaire, présentant une paroi extérieure cylindrique ainsi qu'une paroi intérieure cylindrique définissant la chambre intérieure 19. Toutefois, la paroi extérieure de ce corps pourrait présenter d'autres formes. De même, la paroi intérieure pourrait présenter une forme différente, avec une section circulaire variable, voire une section elliptique ou ovoïde.

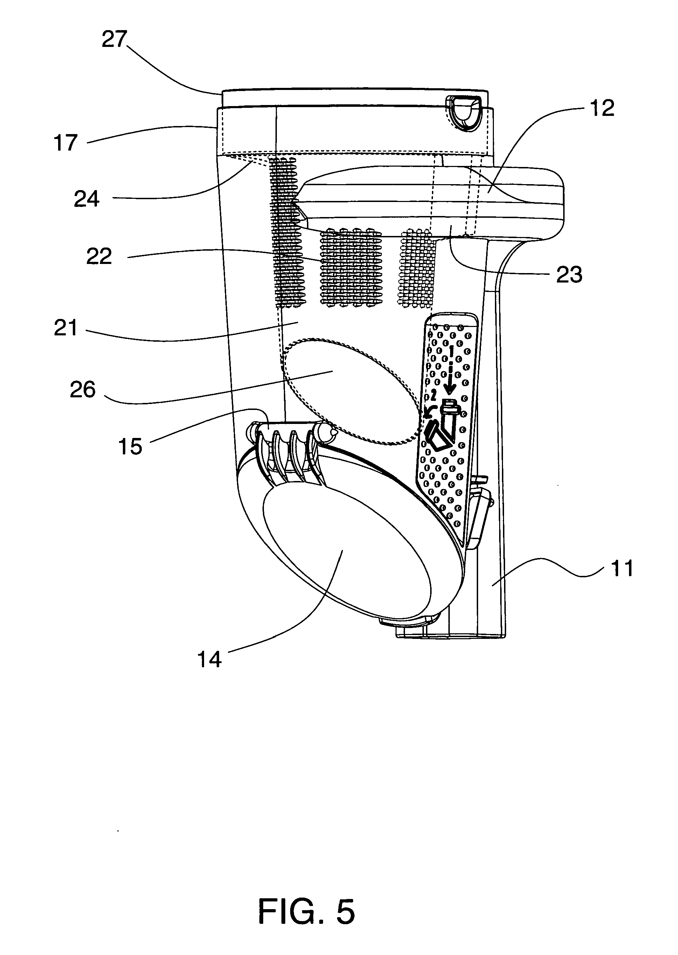

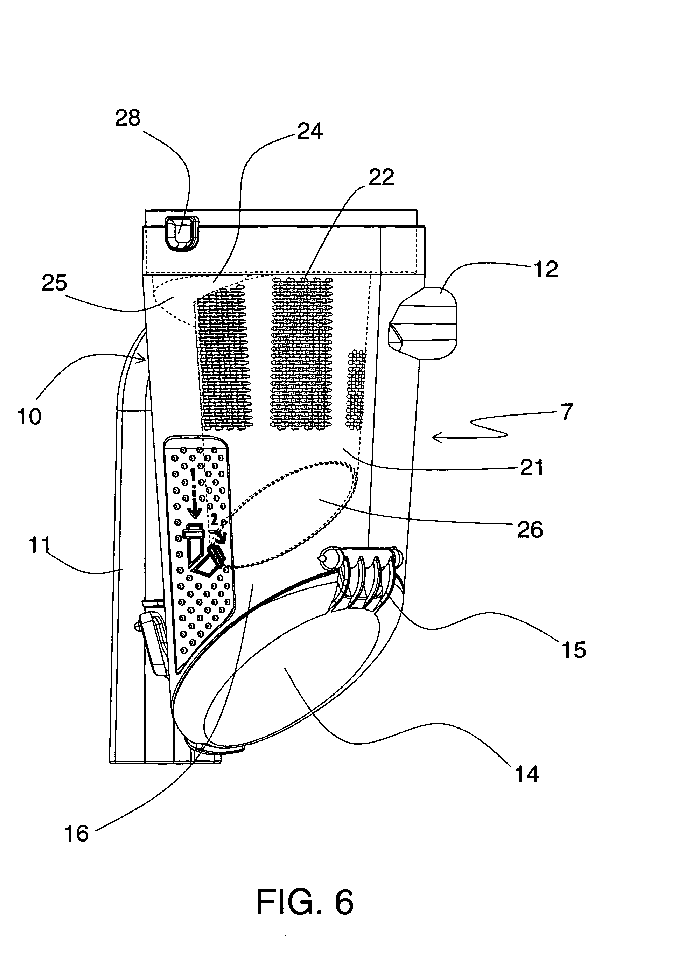

Les figures 5 et 6 illustrent le dispositif cyclonique assemblé, le filtre séparateur 20 étant intégré dans la partie centrale de la chambre intérieure 19 du bol 10. Son fonctionnement va maintenant être précisé. Le flux d'air pollué, c'est-à-dire comprenant des poussières et déchets, provenant du suceur 2 de l'aspirateur, remonte par les portions de tube 11, 12 jusqu'à l'entrée 13 du bol 10, dans lequel il pénètre avec une vitesse et une direction appropriées grâce à l'accélération générée par la rampe d'accélération 40. Une rampe 23 et plus exactement sa surface inférieure 25, qui sera décrite plus loin, forme une surface supérieure de guidage du flux, qui va donc être entraîné vers le bas sous cette surface 25, selon un déplacement hélicoïdal, dans l'espace délimité par la grille 21 et la paroi latérale du bol 10 au sein de la chambre intérieure 19 du bol 10 qui est aussi appelée chambre cyclonique 19. Ce mouvement tourbillonnaire va se prolonger jusque vers le bas du bol 10, les déchets étant progressivement propulsés vers les parois latérales du bol 10 sous l'effet de la force centrifuge, avant de tomber dans la zone de stockage 16 représentée par la partie inférieure du bol 10. Le flux d'air arrivé vers le bas du bol 10 inverse sa direction et remonte dans la partie centrale du dispositif, sous la grille 21, selon un mouvement tourbillonnaire ascendant, avant de remonter le long des parois latérales de la grille 21 pour finalement s'échapper par des zones d'ouvertures 22 aménagées dans la paroi latérale de la grille 21 pour remonter à l'intérieur de cette grille de filtrage 21. Durant ce parcours ascendant, les dernières poussières de petite taille encore présentes dans le flux vont être bloquées soit dans le volume 26 sous la grille 21, soit par les ouvertures 22 de la grille 21.

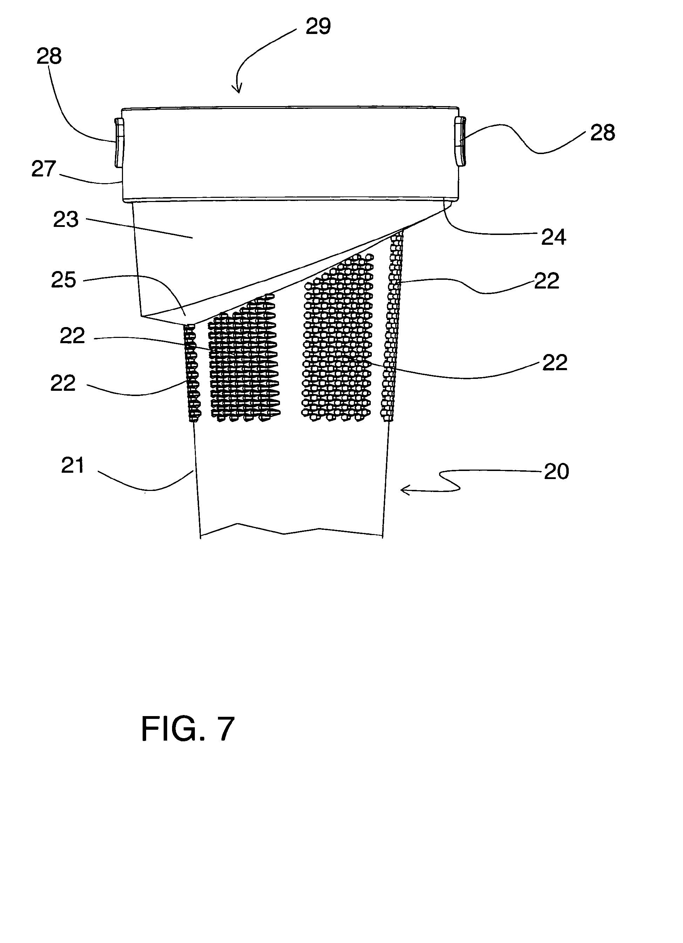

La figure 7 illustre la partie haute du filtre séparateur 20, qui comprend dans sa partie supérieure un chapeau cylindrique 27 de diamètre correspondant sensiblement au diamètre de la partie haute 17 du bol 10, afin d'assurer une liaison mécanique étanche entre ces deux éléments lorsqu'ils sont assemblés, comme cela est représenté sur la figure 6. Des pattes 28 aménagées sur la circonférence extérieure du chapeau cylindrique 27 du filtre séparateur 20 coopèrent avec des encoches 18 de la partie haute du bol 10, assurant ainsi un bon positionnement et maintien des deux éléments. Le chapeau cylindrique 27 du filtre séparateur forme un logement supérieur 29 dans lequel est logé un filtre en mousse 30 en forme de disque. Le filtre séparateur comprend de plus une grille de filtrage 21 de forme sensiblement cylindrique de plus petit diamètre que le chapeau 27, qui s'étend sous ce chapeau de sorte de s'étendre dans la partie centrale de la chambre cyclonique 19 comme cela a été décrit plus haut. Cette grille de filtrage 21 comprend des zones 22 avec des petites ouvertures sur sa circonférence, afin de laisser passer un flux d'air tout en remplissant une fonction de filtrage.

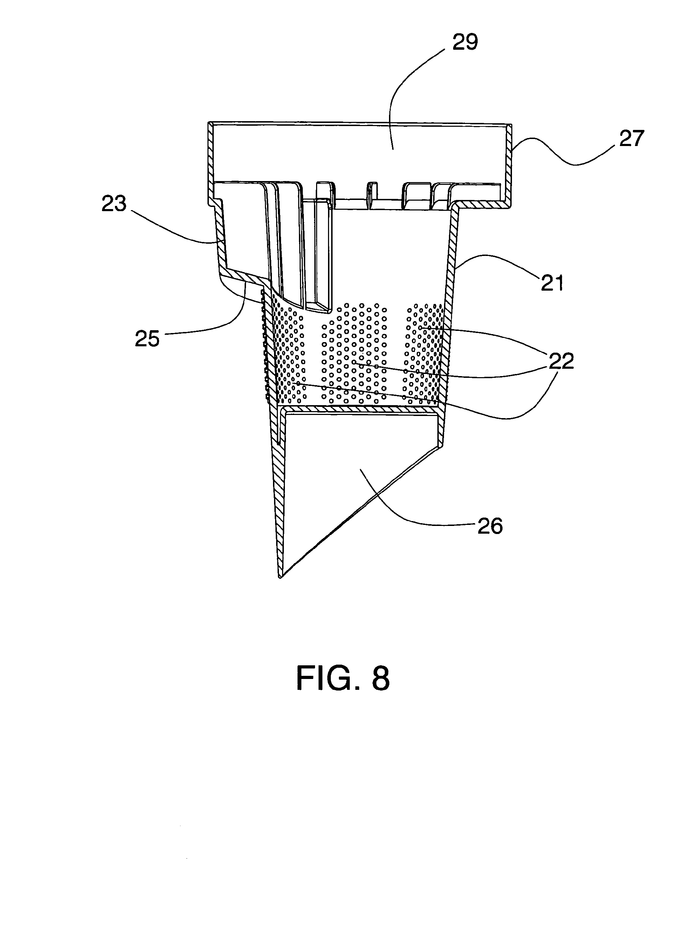

Le filtre séparateur 20 comprend de plus un élément formant rampe 23, que nous appellerons simplement rampe, de forme hélicoïdale, positionné sous le chapeau 27 du filtre séparateur. Cette rampe 23 s'étend depuis un point initial 24 au niveau de la surface inférieure du chapeau 27, de sorte que l'extrémité finale de la rampe se trouve à proximité de l'entrée d'air 13 du bol 10 lorsque le dispositif cyclonique est assemblé. Cette rampe 23 s'étend ensuite vers le bas en parcourant sensiblement un demi-tour, et occupant sensiblement tout le volume entre la grille 21 et la paroi latérale du bol 10, comme cela est visible sur la figure 6. La surface inférieure 25 de cette rampe 23 forme donc une surface de guidage hélicoïdale pour le flux d'air entrant, lui permettant d'amorcer le mouvement tourbillonnaire vers le bas autour de la grille 21. La pente vers le bas de cette surface de guidage garantit que le flux d'air, après avoir effectué son premier tour autour de la grille intérieure 21 dans la chambre cyclonique 19, n'entre pas en collision avec le flux d'air entrant par l'ouverture 13 du bol mais continue son cheminement tourbillonnaire plus bas. De plus, la surface de guidage 25 de la rampe 23 présente une seconde inclinaison de l'ordre de 10 à 15 degrés vers l'extérieur, particulièrement visible sur la figure 8. Elle forme une pente dans une direction allant depuis le filtre 21 vers la paroi du bol 10, qui favorise le guidage du flux d'air vers la paroi du bol 10, augmentant ainsi l'effet centrifuge apporté par la vitesse de rotation et évitant que l'air encore pollué ne traverse les ouvertures des zones 22 de la grille de filtrage 21 dans cette phase initiale de traitement au sein du dispositif.

Naturellement, l'invention ne se limite pas à la géométrie de la rampe 23 choisie dans ce mode d'exécution. Cette rampe peut en effet s'étendre sur au moins un quart de tour et aller jusqu'au tour complet, s'étendant toutefois de préférence au moins sur un demi-tour. De plus, son inclinaison vers l'extérieur est avantageuse car elle permet de réduire la différence de diamètre entre la grille 21 et le bol 10, c'est-à-dire la distance entre la grille 21 et la paroi du bol 10, tout en obtenant une solution satisfaisante. Une inclinaison comprise entre 5 et 20 degrés est satisfaisante, cet angle se mesurant par rapport à un plan perpendiculaire au plan tangent à la grille 21 au niveau de la surface de guidage 25. Toutefois, cette inclinaison reste optionnelle et non obligatoire.

La fixation de la rampe 23 directement sur le filtre séparateur 20 est avantageuse puisqu'elle permet d'obtenir une configuration finale performante du dispositif de séparation cyclonique par l'assemblage d'un minimum d'éléments distincts. Cette rampe peut être obtenue directement par moulage et former une seule pièce avec au moins le chapeau cylindrique 27 du filtre séparateur 20 ou en variante être fabriquée séparément puis fixée par tous moyens sur le filtre séparateur.

Les différents composants du filtre séparateur pourraient présenter d'autres géométries sans sortir du concept de l'invention. Ainsi, la grille de filtrage 21 peut ne pas être cylindrique mais peut présenter une section circulaire variable, diminuant par exemple vers le bas comme cela est représenté dans le mode d'exécution où elle est ainsi plus exactement une portion de cône. Cette section pourrait présenter une autre forme, par exemple elliptique ou ovoïde. L'expression sensiblement cylindrique a été utilisée pour intégrer ces différentes variantes. De même, le chapeau 27 pourrait présenter toute autre géométrie rectangulaire, carrée, elliptique...

La figure 8 illustre le filtre séparateur 20 en coupe, et illustre de plus la partie inférieure du filtre selon ce mode d'exécution. La partie inférieure de la grille cylindrique 21 forme une zone borgne 26 délimitée par un fond horizontal de la grille 21, et par les surfaces latérales du cylindre ou cône se terminant selon un plan incliné, de l'ordre de 45 degrés, sensiblement parallèle à la porte inférieure du bol 10. Cette géométrie permet d'obtenir un volume plus important que celui des solutions de l'état de la technique dans lesquelles le cylindre se termine selon un plan horizontal à proximité du fond de la grille, tout en présentant un aspect esthétique attractif.

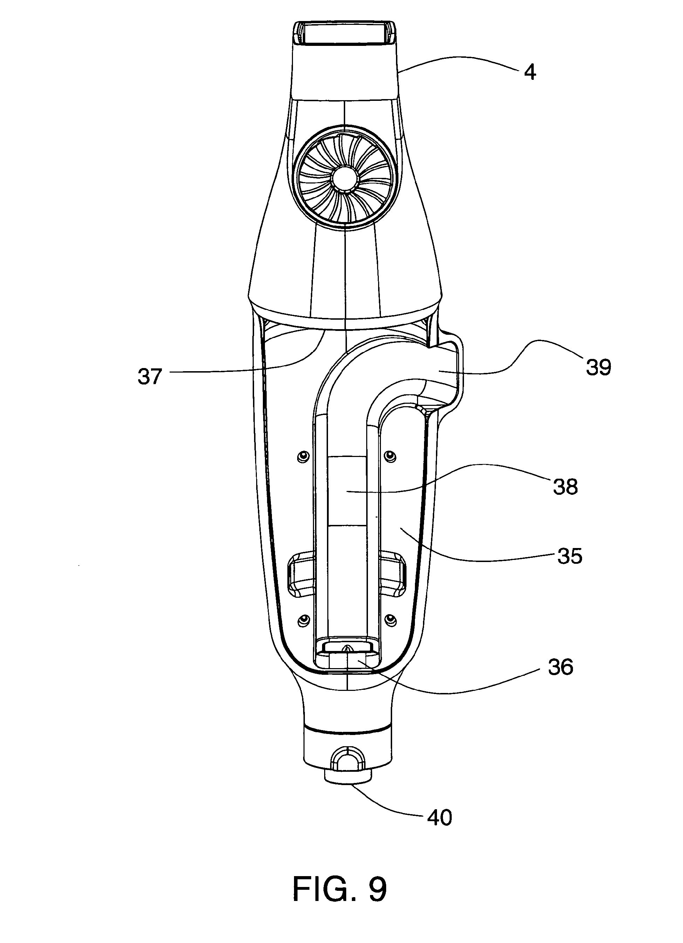

La figure 9 illustre la portion du bâti du manche 4 de l'aspirateur formant un logement 35 pour recevoir le dispositif de séparation cyclonique. Ce logement comprend une connexion 36 dans sa partie inférieure, à l'extrémité d'un tuyau d'aspiration vertical 40 provenant du suceur 2. Cette connexion est destinée à une liaison avec le tuyau vertical 11 solidaire du bol 10, afin de former un tuyau d'aspiration continu et vertical. D'autre part, ce logement 35 comprend dans sa partie supérieure une seconde connexion 37 destinée à la liaison au moteur du flux d'air vertical sortant du dispositif de séparation cyclonique au travers du passage au centre du couvercle 32. Le fond du logement 35 comprend une partie creuse verticale 38 pour recevoir une partie du tuyau verticale 11 du dispositif de séparation cyclonique et une partie creuse horizontale 39 pour recevoir une partie du tuyau horizontale 12 du dispositif de séparation cyclonique et permettre ainsi l'emboîtement suffisant du dispositif de séparation cyclonique au sein du manche 4 de l'aspirateur, de sorte que son corps principal se trouve en continuité du reste du manche 4, en masquant au moins partiellement les portions de tuyau 11, 12 pour atteindre une esthétique attrayante.

Une telle architecture permet un guidage du bol 10 lors de son repositionnement dans l'appareil.

Par cette solution, le montage et démontage du dispositif de séparation cyclonique 7 sur le manche 4 de l'aspirateur est simple et convivial, ce qui facilite le vidage des déchets stockés dans le dispositif.

En effet, le montage du dispositif de séparation cyclonique se fait en positionnant l'extrémité inférieure du tuyau vertical 11 dans sa connexion 36 dans la partie basse du logement 35, puis en réalisant une rotation de l'ensemble du dispositif vers le fond du logement 35, tout en appuyant vers le bas le dispositif de séparation cyclonique pour permettre l'escamotage vers le bas d'une partie basse du tuyau 11, en escamotant une partie mobile maintenue en position de repos par un ressort, jusqu'à ce que l'ensemble du dispositif de séparation cyclonique vienne en butée au fond du logement 35. Le relâchement de la pression vers le bas du dispositif permet à la pièce mobile de remonter sous l'effet de son ressort de rappel, en entraînant en même temps vers le haut le dispositif de séparation cyclonique qui vient finalement en appui dans la partie haute du logement 35, suffisant pour garantir une bonne connexion haute 32, 37 pour l'évacuation du flux d'air traité, tout en assurant un maintien opérationnel et performant du dispositif de séparation cyclonique au sein du manche 4. Le démontage du dispositif se fait selon un procédé inverse, en le pressant d'abord vers le bas avant de le pivoter vers l'avant.

L'invention a été illustrée dans le cadre d'une mise en oeuvre sur un aspirateur balai. Toutefois, le concept de l'invention est compatible avec tout aspirateur, quelle que soit sa puissance, même pour des puissances élevées entre 1500 et 1800 W, quel que soit le mode de fonctionnement de l'aspirateur, de manière autonome à l'aide d'une batterie ou par connexion au secteur. Dans de tels cas, les dimensions du dispositif seront adaptées aux conditions d'écoulement des flux d'air. De plus, le dispositif de séparation cyclonique pourra être utilisé comme unique séparateur de déchets ou en combinaison avec un sac filtrant, comme dans un aspirateur à traineau, permettant de réduire la quantité de déchets atteignant le sac et donc de réduire les désagréments induits par les opérations de maintenance de cette solution.

## Revendications

1. Dispositif de séparation cyclonique de déchets et poussières pour aspirateur à poussières sous la forme d'un corps sensiblement cylindrique, comportant une chambre cyclonique intérieure sensiblement cylindrique (19) accessible par une entrée d'air (13) dans sa partie supérieure, ainsi qu'un filtre séparateur (20) logé dans la partie centrale de la chambre intérieure (19), **caractérisé en ce qu'**il comprend un tuyau d'entrée, qui conduit le flux d'air provenant du suceur vers une chambre intérieure, ce tuyau d'entrée comprenant une première portion de tuyau (11) sensiblement verticale, formant un coude dans sa partie haute, poursuivie par une seconde portion de tuyau (12) sensiblement horizontale pour conduire un flux d'air vers l'entrée d'air (13), cette portion de tuyau étant disposée autour de la chambre cyclonique intérieure sensiblement cylindrique (19), depuis un point initial (41) vers un point final (42) à proximité de l'entrée d'air (13), la section de cette portion de tuyau (12) vers le point final (42) étant plus petite que sa section vers le point initial (41) de sorte à former une rampe d'accélération (40) pour le flux d'air entre ces deux points (41, 42).

2. Dispositif de séparation cyclonique selon la revendication précédente, **caractérisé en ce que** la portion de tuyau (12) pour conduire le flux d'air vers l'entrée d'air (13) de la chambre cyclonique (19) parcourt au moins un quart de tour autour de la chambre cyclonique (19).

3. Dispositif de séparation cyclonique selon la revendication 1, **caractérisé en ce que** la portion de tuyau (12) pour conduire le flux d'air vers l'entrée d'air (13) de la chambre cyclonique (19) parcourt au moins deux cinquièmes de tour autour de la chambre cyclonique (19).

4. Dispositif de séparation cyclonique selon l'une des revendications précédentes, **caractérisé en ce que** la portion de tuyau (12) pour conduire le flux d'air vers l'entrée d'air (13) de la chambre cyclonique (19) est sensiblement horizontale.

5. Dispositif de séparation cyclonique selon l'une des revendications précédentes, **caractérisé en ce que** la portion de tuyau (12) pour conduire le flux d'air vers l'entrée d'air (13) de la chambre cyclonique (19) est reliée à la portion de tuyau (11) verticale dont la section décroit, vu dans le sens de circulation de l'air.

6. Dispositif de séparation cyclonique selon l'une des revendications précédentes, **caractérisé en ce qu'**il comporte un bol (10) amovible délimitant la chambre cyclonique (19), le bol portant la portion de tuyau (12).

7. Dispositif de séparation cyclonique selon la revendication précédente, **caractérisé en ce que** le bol (10) comprend un corps tubulaire de surface latérale extérieure cylindrique délimitant la chambre cyclonique (19) et **en ce que** la portion de tuyau (12) est fixée en contact avec la surface latérale extérieure cylindrique du corps tubulaire du bol (10).

8. Dispositif de séparation cyclonique selon la revendication 6 ou 7, **caractérisé en ce que** le bol (10) comprend une partie inférieure inclinée et articulée formant une porte (14).

9. Aspirateur à poussières **caractérisé en ce qu'**il comprend un dispositif de séparation cyclonique des poussières et déchets selon l'une des revendications 1 à 8.

10. Aspirateur à poussières, de type balai, **caractérisé en ce qu'**il comprend un logement (35) agencé dans son manche (4) pour recevoir le dispositif de séparation cyclonique selon l'une des revendications 6 à 8, ce logement (35) comprenant une première connexion (36) dans sa partie inférieure reliée à une portion de tuyau verticale (11) du bol (10) et une seconde connexion (37) dans sa partie supérieure reliée à la sortie (32) du dispositif de séparation cyclonique.

## Patentansprüche

1. Zyklonabscheider für Schmutz und Staub für den Einsatz in Staubsaugern in Form eines im Wesentlichen zylindrischen Körpers, der eine im Wesentlichen zylindrische Zyklon-Innenkammer (19) aufweist, die über einen Lufteinlass (13) im oberen Teil zugänglich ist, sowie einen mittig in der Innenkammer (19) angeordneten Trennfilter (20), **dadurch gekennzeichnet, dass** er ein Einlassrohr aufweist, das den vom Sauger kommenden Luftstrom in eine Innenkammer lenkt, wobei dieses Einlassrohr einen ersten Rohrabschnitt (11) aufweist, der im Wesentlichen senkrecht ist und im oberen Teil ein Rohrknie bildet, gefolgt von einem zweiten Rohrabschnitt (12), der im Wesentlichen waagerecht ist und den Luftstrom in Richtung des Lufteinlasses (13) lenkt, wobei dieser Rohrabschnitt um die im Wesentlichen zylindrische Zyklon-Innenkammer (19) herum angeordnet ist, von einem Ausgangspunkt (41) bis zu einem Endpunkt (42) in der Nähe des Lufteinlasses (13), wobei der Querschnitt dieses Rohrabschnitts (12) in Richtung des Endpunkts (42) geringer ist als der Querschnitt zum Ausgangspunkt (41) hin, so dass zwischen diesen beiden Punkten (41, 42) eine Art Beschleunigungsrampe (40) für den Luftstrom besteht.

2. Zyklonabscheider nach dem vorhergehenden Anspruch, **dadurch gekennzeichnet, dass** der Rohrabschnitt (12) zur Lenkung des Luftstroms in Richtung des Lufteinlasses (13) der Zyklon-Kammer (19) mindestens zu einem Viertel um die Zyklon-Kammer (19) herumgeführt ist.

3. Zyklonabscheider nach Anspruch 1, **dadurch gekennzeichnet, dass** der Rohrabschnitt (12) zur Lenkung des Luftstroms in Richtung des Lufteinlasses (13) der Zyklon-Kammer (19) mindestens zu zwei Fünfteln um die Zyklon-Kammer (19) herumgeführt ist.

4. Zyklonabscheider nach einem der vorhergehenden Ansprüche, **dadurch gekennzeichnet, dass** der Rohrabschnitt (12) zur Lenkung des Luftstroms in Richtung des Lufteinlasses (13) der Zyklon-Kammer (19) im Wesentlichen waagerecht ist.

5. Zyklonabscheider nach einem der vorhergehenden Ansprüche, **dadurch gekennzeichnet, dass** der Rohrabschnitt (12) zur Lenkung des Luftstroms in Richtung des Lufteinlasses (13) der Zyklon-Kammer (19) mit dem senkrecht stehenden Rohrabschnitt (11) verbunden ist, dessen Querschnitt sich in Richtung der Luftzirkulation verjüngt.

6. Zyklonabscheider nach einem der vorhergehenden Ansprüche, **dadurch gekennzeichnet, dass** er eine abnehmbare Schale (10) aufweist, welche die Zyklon-Kammer (19) begrenzt, wobei die Schale den Rohrabschnitt (12) trägt.

7. Zyklonabscheider nach dem vorhergehenden Anspruch, **dadurch gekennzeichnet, dass** die Schale (10) einen rohrförmigen Körper mit zylindrischer Außenfläche umfasst, der die Zyklon-Kammer (19) begrenzt, und **dadurch gekennzeichnet, dass** der Rohrabschnitt (12) auf der zylindrischen seitlichen Außenfläche des rohrförmigen Körpers der Schale (10) aufliegend befestigt ist.

8. Zyklonabscheider nach Anspruch 6 oder 7, **dadurch gekennzeichnet, dass** die Schale (10) einen abgeschrägten unteren Teil mit Gelenk aufweist, der eine Klappe (14) bildet.

9. Staubsauger, **dadurch gekennzeichnet, dass** er einen Zyklonabscheider für Schmutz und Staub nach einem der Ansprüche 1 bis 8 aufweist.

10. Staubsauger vom Typ Bürstsauger, **dadurch gekennzeichnet, dass** er ein Fach (35) im Gehäuse (4) zur Aufnahme des Zyklonabscheiders nach einem der Ansprüche 6 bis 8 aufweist, wobei dieses Fach (35) einen ersten Anschluss (36) im unteren Teil zur Verbindung mit einem senkrechten Rohrabschnitt (11) der Schale (10) und einen zweiten Anschluss (37) im oberen Teil zur Verbindung mit dem Ausgang (32) des Zyklonabscheiders aufweist.

## Claims

1. Cyclonic dust and waste separation device for vacuum cleaner, comprising a substantially cylindrical body, having a substantially cylindrical inner cyclone chamber (19) accessible through an air inlet (13) in its upper part, and a separating filter (20) housed in the central part of the inner chamber (19), **characterised in that** it comprises an inlet pipe, which conducts the air flow from the nozzle to an inner chamber, this inlet pipe comprising a first substantially vertical pipe portion (11), forming a bend in its upper part, followed by a second substantially horizontal pipe portion (12) to conduct an air flow towards the air inlet (13), this pipe portion being arranged around the substantially cylindrical inner cyclone chamber (19), from a starting point (41) to an end point (42) near the air inlet (13), the cross-section of this pipe portion (12) towards the end point (42) being smaller than its cross-section towards the starting point (41) so as to form an acceleration ramp (40) for the air flow between these two points (41, 42).

2. Cyclonic separation device according to the preceding claim, **characterised in that** the pipe portion (12) for conducting the air flow towards the air inlet (13) of the cyclone chamber (19) makes at least a quarter of a turn around the cyclone chamber (19).

3. Cyclonic separation device according to claim 1, **characterised in that** the pipe portion (12) for conducting the air flow towards the air inlet (13) of the cyclone chamber (19) makes at least two fifths of a turn around the cyclone chamber (19).

4. Cyclonic separation device according to one of the preceding claims, **characterised in that** the pipe portion (12) for conducting the air flow towards the air inlet (13) of the cyclone chamber (19) is substantially horizontal.

5. Cyclonic separation device according to one of the preceding claims, **characterised in that** the pipe portion (12) for conducting the air flow towards the air inlet (13) of the cyclone chamber (19) is connected to the vertical pipe portion (11) whose cross-section decreases, as viewed in the direction of air flow.

6. Cyclonic separation device according to one of the preceding claims, **characterised in that** it comprises a removable bowl (10) defining the cyclone chamber (19), the bowl carrying the pipe portion (12).

7. Cyclonic separation device according to the preceding claim, **characterised in that** the bowl (10) comprises a tubular body of cylindrical outer side surface defining the cyclone chamber (19) and **in that** the pipe portion (12) is fixed in contact with the cylindrical outer side surface of the tubular body of the bowl (10).

8. Cyclonic separation device according to claim 6 or 7, **characterised in that** the bowl (10) includes an inclined and hinged lower part forming a door (14).

9. Vacuum cleaner **characterised in that** it comprises a cyclonic dust and waste separation device according to one of claims 1 to 8.

10. Brush type vacuum cleaner, **characterised in that** it comprises a housing (35) arranged in its handle (4) for receiving the cyclonic separation device according to one of claims 6 to 8, this housing (35) comprising a first connection (36) in its lower part connected to a vertical pipe portion (11) of the bowl (10) and a second connection (37) in its upper part connected to the outlet (32) of the cyclonic separation device.
